# EUROPEAN PATENT APPLICATION

(11) **EP 1 842 616 A2**
(43) Date of publication of application: **10.10.2007**
(21) Application number: 07005476.2
(22) Date of filing: 16.03.2007
(51) Int. Cl.: B23K 20/00

(54) **Method for manucacturing a heat exchanger**

(30) Priority: 30.03.2006 JP 2006095838
(71) Applicant: Xenesys Inc., Akashi-shi, Hyougo-ken (JP)
(72) Inventor: Matsuzaki, Toyoaki, Akashi-Shi, Hyogo-Ken (JP); Watanabe, Taro, Akashi-Shi, Hyogo-Ken (JP)
(74) Representative: Klunker . Schmitt-Nilson . Hirsch

(57) **Abstract**

Heat exchange plates (10) are stacked, with a pressing force applied to the plates (10) so as to maintain parallelism of them and prevent deformation of them during a diffusion bonding process. The stacking condition is maintained and adjacent plates (10) come into contact with each other at projections (13) and peripheral edges. Space surrounding the contact portions of the plates (10) is put in a vacuum or low pressure state in which only an inner gas atmosphere exists. The plates (10) are kept at a temperature at which the diffusion bonding occurs by a predetermined period of time to diffusion-bond portions of the plates (10), which are only brought into contact with each other and have not been bonded together.

## Description

### BACKGROUND OF THE INVENTION

### Field of the Invention

The present invention relates a method for manufacturing a heat exchanger in which a plurality of heat exchange plates each made of a thin metallic plate are combined in parallel and integrally with each other, and especially to a method for manufacturing such a heat exchanger in which the press-formed heat exchange plates are placed one upon another and firmly combined integrally with each other at contact portions thereof to provide strength bearing a high pressure for the heat exchanger.

### Description of the Related Art

If there is a demand that heat transfer coefficient is increased to enhance heat exchange efficiency, utilizing a heat exchanger by which transfer of heat (i.e., heat exchange) is made between a high temperature fluid and a low temperature fluid, a plate-type heat exchanger has conventionally been used widely. The plate-type heat exchanger has a structure in which a plurality of heat transfer plates are placed parallelly one upon another at prescribed intervals so as to form passages, which are separated by means of the respective heat transfer plates. A high temperature fluid and a low temperature fluid flow alternately in the above-mentioned passages to make heat exchange through the respective heat transfer plates.

In the conventional plate-type heat exchanger, gasket members formed of elastic material are placed between the adjacent two plates to make the distance between them constant and define passages for fluid. However, a high pressure of the heat exchange fluid flowing between the plates may cause deformation of the gasket member, thus disabling an appropriate separation of the fluids from being ensured or leading to an unfavorable variation in distance between the plates. In such a case, an effective heat exchange may not be carried out, thus causing a problem. In view of these facts, the conventional heat exchanger involves a problem that the heat exchange fluids can be utilized only in a pressure range in which the gasket member withstands.

There has recently been proposed a heat exchanger having a structure in which metallic thin plates, which are placed at predetermined intervals, are joined together, without using any gasket members, at their ends by welding to assemble the plates into a single unit so as to form passages for heat exchange fluids, on the opposite sides of the respective plates. Japanese Patent Provisional Publication No. 2003-194490 describes such a kind of a heat exchanger, as an example of an invention made by the present inventor.

In most cases of the conventional heat exchangers utilizing a bonding process such as a welding, the plates that are placed one upon another are combined through a welding applied only to a periphery of the plate, due to restriction of an operation such as welding. As a result, difference in pressure between heat exchange fluids flowing along the respective opposite surfaces of the plates becomes larger, the distance between the adjacent plates at a non-bonded portion such as a central portion may vary, not only deteriorating heat exchange performance, but also leading to damage of the heat exchanger. Therefore, such a heat exchanger may not be used under a relatively high pressure condition.

There have been proposed other types of heat exchangers utilizing diffusion bonding applied to all the contact portions of the assembled plates. Japanese Patent Publication No. S54-18232 and Japanese Patent Provisional Publication No. 2003-262489 disclose such heat exchangers.

The conventional heat exchangers have structures as described in the above-mentioned prior art documents. In the heat exchangers as described in Japanese Patent Publication No. S54-18232 and Japanese Patent Provisional Publication No. 2003-262489, the stacked plates are bonded at all the contact portions, thus providing a high strength by which deformation of the heat exchanger may not occur. However, in general, not only heat, but also a high pressing force is applied to the stacked plates in a vacuum vessel during the diffusion bonding. Accordingly, Japanese Patent Publication No. S54-18232 uses a combination of flat plates and corrugated plates having an optimized shape preventing deformation even when a pressure is applied. Japanese Patent Provisional Publication No. 2003-262489 uses plates having specific configurations, which are provided with partition wall sections and flow control sections that are obtained by subjecting the surface of the plate, serving as a heat transfer section, to an etching or a machining process, or fixing partition wall sections and flow control sections previously formed in separate parts on a flat plate.

Therefore, it is difficult to apply the technique of the heat exchanger described in Japanese Patent Publication No. S54-18232 and Japanese Patent Provisional Publication No. 2003-262489 in which shapes of the plates serving as a primary part of the heat exchanger is restricted, to the other type of heat exchanger. This technique cannot be applied, without modification, to bonding of the plates for the plate-type heat exchanger in which all the press-formed plates are placed one upon another so that projections of the adjacent plates come into contact with each other, in the same manner as the heat exchanger described in Japanese Patent Provisional Publication No. 2003-194490, due to problems of deformation.

### SUMMARY OF THE INVENTION

An object of the present invention, which was made to solve the above-mentioned problems, is therefore to provide a method for manufacturing a heat exchanger, in which heat exchange plates are combined together by diffusion-bonding contact portions of heat exchange plates that are caused by placing the plates one upon another, to remarkably increase integrally bonded areas of the adjacent plates, to substantially enhance a pressure proof strength of the heat exchanger composed of the heat exchange plates, thus permitting application to various types of heat exchange.

In order to attain the aforementioned object, a method of the first aspect of the present invention for manufacturing a heat exchanger, comprises the steps of: placing a plurality of heat exchange plates one upon another, each of which is formed of a metallic plate member having a predetermined pattern of irregularity and combining the plates into a heat exchanger, in which each of the heat exchange plates is formed into a predetermined shape by a press-forming process so that each of the heat exchange plates includes on at least part thereof a heat transfer section having the pattern of irregularity and first and second opposite surfaces with which first and second heat exchange fluids come into contact, respectively, the heat exchange plates as combined come into contact with each other on at least one part of peripheries thereof, and first gap portions through which the first heat exchange fluid is to pass and second gap portions through which the second heat exchange fluid is to pass are provided alternately between the heat exchange plates, wherein, the method further comprises the steps of: placing a predetermined number of the heat exchange plates one upon another to apply a pressing force to the heat exchange plates in a stacking direction thereof to an extent that at least parallelism of the heat exchange plates as placed is maintained and the heat exchange plates are not plastically deformed even when a temperature thereof increases to a predetermined temperature at which a diffusion bonding associated with material of the heat exchange plates occurs, maintaining such a stacking condition and bringing adjacent plates at projections and peripheral edges that protrude from the heat exchange plates into contact with each other; and putting space surrounding at least contact portions of the plates in a vacuum state or a low pressure state in which only an inner gas atmosphere exists, keeping the plates at a predetermined temperature at which the diffusion bonding occurs by a predetermined period of time and diffusion-bonding portions of the plates, which are only brought into contact with each other and have not been bonded together.

According to the first aspect of the present invention, the heat exchange plates are placed one upon another and a minimum pressure is applied to the stacked plates only in the stacking direction, to ensure a contact state at positions where the adjacent plates should come into contact with each other, and the stacked plates are put in a temperature condition and an atmospheric condition under which diffusion bonding of metal of which the plates are made, appropriately progresses, to bond the adjacent plates together at a plurality of contact portions thereof by diffusion bonding. It is therefore possible to manufacture the heat exchanger in which the stacked plates are combined firmly together not only at the peripheral edges of the plates, but also at a large number of contact portions thereof, by using normal heat exchange plates obtained by a press-forming process, without impairment of the press-formed shapes of the plates. Accordingly, a pressure proof strength for each part of the heat exchanger can be substantially enhanced to permit increase in pressure of a heat exchange fluid as introduced or increase in difference in pressure between the heat exchange fluids, thus making it possible to set appropriate conditions under which an effective heat exchange is made. A high performance heat exchanger can therefore be provided.

In the second aspect of the method of the present invention for manufacturing the heat exchanger, the method may further comprise the steps of: welding, at a stage of the step of placing the heat exchange plates one upon another, the adjacent plates at the peripheral edges thereof to form a welded assembly in which no variation in a positional relationship between the plates occurs; and placing the welded assembly in a vacuum state or a low pressure state in which only an inner gas atmosphere exists, keeping the plates at a predetermined temperature at which the diffusion bonding occurs by a predetermined period of time and diffusion bonding portions of the plates, which are only brought into contact with each other and have not been bonded together.

According to the second aspect of the present invention, the stacked heat exchange plates are previously welded at the peripheral edges of the plates to prepare a welded assembly and then the welded assembly are bonded together by diffusion bonding at portions thereof, which are brought into contact with each other and have not been bonded together. The plates can therefore be previously combined into the welded assembly, prior to the diffusion bonding, to ensure an appropriate stacking state of the plates so that the welded assembly can be easily handled. This step may be applied as a subsequent step in the conventional method of manufacturing a heat exchanger in which only peripheral edges of plates are welded together, thus enabling the plates as combined in accordance with the conventional method of a heat exchanger to be more firmly combined together. Therefore, a pressure proof strength can be substantially enhanced to permit to introduce a high pressure heat exchange fluid into a gap between the adjacent plates. As a result, a heat exchange efficiency can be improved in accordance with various types of heat exchange conditions.

In the third aspect of the method of the present invention for manufacturing the heat exchanger, the step of welding the heat exchange plates may be carried out to combine the plates into the welded assembly so that each of the first and second gap portions is isolated from outside, excluding first fluid inlet and outlet portions communicating with the first gap portion and second fluid inlet and outlet portions communicating with the second gap portion, and the method may further comprises the steps of: connecting first supply/discharge conduits, which permit supply of a fluid into the first gap portion and/or discharge of the fluid therefrom, to the first inlet and out let portions, and connecting second supply/discharge conduits, which permit supply of a fluid into the second gap portion and/or discharge of the fluid therefrom; removing a gas from the first gap portion through the first supply/discharge conduits to provide the vacuum state therein or supplying an inert gas into the first gap portion while removing a gas therein, through the first supply/discharge conduits, to provide the low pressure state, and supplying an inert gas having a predetermined high temperature and a predetermined pressure into the second gap portion while removing a gas therein, through the second supply/discharge conduits, to provide a higher pressure state than the first gap portion, and then keeping the contact portions of the projections, which are placed in the heat transfer section of each of the plates and exist in the first gap portion, at the predetermined temperature at which the diffusion bonding occurs by the predetermined period of time and diffusion-bonding the contact portions of the plates; and then, removing a gas from the second gap portion through the second supply/discharge conduits to provide the vacuum state therein or supplying an inert gas into the second gap portion while removing a gas therein, through the second supply/discharge conduits, to provide the low pressure state, and supplying an inert gas having a predetermined high temperature and a predetermined pressure into the first gap portion while removing a gas therein, through the first supply/discharge conduits, to provide a higher pressure state than the second gap portion, and then keeping the contact portions of the projections, which are placed in the heat transfer section of each of the plates and exist in the second gap portion, at the predetermined temperature at which the diffusion bonding occurs by the predetermined period of time and diffusion-bonding the contact portions of the plates.

According to the third aspect of the present invention, the gap portion including portions of the plates to be diffusion-bonded is put in the vacuum state or the low pressure state in which only the inner gas atmosphere exists, and the inert gas having a high temperature is introduced into the adjacent gap portion, which is placed on the opposite side to the above-mentioned gap portion relative to the portions of the plates to be diffusion-bonded, to provide a state in which diffusion bonding easily occurs at the contact portions of the plates. After completion of the diffusion bonding of the contact portions, the same process environment conditions are applied to the other gap portion and the contact portions of the plates are diffusion-bonded together in the other gap portion, with the result that substantially the equal pressing force is applied to the contact portions of the plates due to difference in pressure between the adjacent gap portions, thus complementing the contact pressure applied to the contact portions of the plates. Appropriate contact areas of the plates can therefore be ensured, irrespective of a pattern of irregularity of the plates to permit to carry out effectively the diffusion bonding. Putting only one of the adjacent gap portions in the vacuum or low pressure state suffices, when carrying out the diffusion bonding, with the result that a space to be subjected to a degassing process to provide the vacuum state may be reduced to reduce a pump load, thus controlling energy consumption required to carry out the diffusion bonding and reducing manufacturing costs of the heat exchanger.

In the fourth aspect of the method of the present invention for manufacturing the heat exchanger, the method may further comprise the steps of: placing the heat exchange plates as combined, in a vessel that is flexibly deformable at least in the stacking direction of the plates and has air inlet and outlet portions, the vessel providing an air-tight property, excluding the air inlet and outlet portions; applying the pressing force to the plates in the stacking direction thereof and discharging a gas in the vessel through the air inlet and outlet portions; and then closing the air inlet and outlet portions to keep an inside of the vessel, which includes the space surrounding the contact portions of the plates, in the vacuum state or the low pressure state.

According to the fourth aspect of the present invention, the stacked heat exchange plates are received in the flexibly deformable vessel so that an internal space of the vessel is put into the vacuum or low pressure state by removing a gas from the vessel. The vessel is flexibly deformed and puts the space surrounding the contact portions of the plates in the vacuum or low pressure state, thus enhancing reliability of the diffusion bonding and providing an improved contact of the plates.

In the fifth aspect of the method of the present invention for manufacturing the heat exchanger, the method may comprise the steps of: causing the heat exchange plate placed on one end side in the stacking direction of the heat exchange plates as combined to be electrically connectable to one electrode of an electric power supply for heating through current application, and causing the heat exchange plate placed on another end side in the stacking direction thereof to be electrically connectable to another electrode of the electric power supply; and applying electric current to the plates placed on the opposite end sides in the stacking direction of the plates to pass a current through all the heat exchange plates, while keeping the space surrounding at least the contact portions of the plates in the vacuum state or the low pressure state, keeping the plates at a predetermined temperature at which the diffusion bonding occurs through heating through current application by a predetermined period of time and diffusion-bonding the portions of the plates, which are only brought into contact with each other and have not been bonded together.

According to the fifth aspect of the present invention, the electric current is applied to the stacked heat exchange plates to directly increase a temperature of the plates by Joule heat to provide an appropriate temperature at which the diffusion bonding properly occurs. There is no need to increase the temperature of the entire space in which the diffusion bonding occurs, so as to heat the plates. Energy consumption required to carry out the diffusion bonding is controlled and manufacturing costs of the heat exchanger is reduced.

In the sixth aspect of the method of the present invention for manufacturing the heat exchanger, the method may comprise the steps of: holding the heat exchange plates as combined, between cooling plates in the stacking direction of the heat exchange plates, each of the cooling plates being made of material, which does not diffusion-bond to the heat exchange plates under diffusion bonding conditions of the heat exchange plates, and having a hollow structure, ensuring a state in which heat transfer occurs between the cooling plates and the heat exchange plates, and connecting cooling conduits to the cooling plates so as to enable cooling fluid to be supplied into the cooling plates and discharged therefrom; and supplying, after completion of diffusion bonding between the heat exchange plates, the cooling fluid into the cooling plates to decrease temperature of the heat exchange plates, while keeping the vacuum state or the low pressure state in which only the inner gas atmosphere exists.

According to the sixth aspect of the present invention, the heat exchange plates as stacked are held between the cooling plates in the stacking direction of the heat exchange plates, and the cooling fluid is supplied, after completion of the diffusion bonding, into the cooling plates to cool the cooling plates so that the combined heat exchange plates can rapidly be cooled. It is therefore possible to shorten a period of time, as small as possible, when the plates as combined are kept, after completion of the diffusion bonding, in a high temperature state which may change characteristic properties of the plate material. Therefore, the temperature of the plates can be reduced to a room temperature without causing unnecessary change in characteristic properties of the plates, thus permitting to manufacture the heat exchanger having no defects and stable performance at a short period of time.

In the seventh aspect of the method of the present invention for manufacturing the heat exchanger, the method may comprise the steps of placing, during combining the heat exchange plates together or in a combined state thereof, a spacer between a pair of contact edges of the heat exchange plates and another adjacent pair of contact edges thereof on opposite sides of the combined heat exchange plates, to apply a uniform pressure to the pairs of contact edges of the heat exchange plates.

According to the seventh aspect of the present invention, the spacer is placed between the pair of contact edges of the heat exchange plates and the other adjacent pair of contact edges thereof on the opposite sides of the combined heat exchange plates, to apply a uniform pressure to the pairs of contact edges of the heat exchange plates, so that the pairs of contact edges of the plates are restricted by means of the spacers. The spacer as placed in this manner provide the adjacent pairs of contact edges of the plates with no space where the contact edges may be deformed, thus preventing the contact edges from being inappropriately deformed, even when increase in a temperature of the plates during the diffusion bonding puts parts of the plates in an annealing condition, thus causing unfavorable deformation of the edges of the plates. Therefore, an appropriate contact state of the adjacent plates can be ensured to cause the diffusion bonding to appropriately progress.

### BRIEF DESCRIPTION OF THE DRAWINGS

FIG. 1 is a schematic structural view of a plate assembly manufacture in accordance with a heat exchanger manufacturing method according to the first embodiment of the present invention;
FIGS. 2(A) and 2(B) are descriptive views illustrating a stacking state of heat exchange plates in the heat exchanger manufacturing method according to the first embodiment of the present invention;
FIG. 3 is a descriptive view illustrating a placing state of cover plates in the heat exchanger manufacturing method according to the first embodiment of the present invention;
FIG. 4 is a descriptive view illustrating a placing state of cooling plates in the heat exchanger manufacturing method according to the first embodiment of the present invention;
FIG. 5 is a descriptive view illustrating a state in which the cooling plates and the heat exchange plates are combined together, in the heat exchanger manufacturing method according to the first embodiment of the present invention;
FIG. 6 is a descriptive view illustrating a state in which the heat exchange plates are received in a vessel for bonding the plates, in the heat exchanger manufacturing method according to the first embodiment of the present invention;
FIG. 7 is a descriptive view illustrating an inside of the vessel for bonding the plates during a diffusion bonding process, in the heat exchanger manufacturing method according to the first embodiment of the present invention;
FIGS. 8(A) and 8(B) are descriptive views illustrating a diffusion bonding state of the plates, in the heat exchanger manufacturing method according to the first embodiment of the present invention;
FIGS. 9(A), 9(B) and 9(C) are descriptive views illustrating a stacking state of the heat exchange plates in the heat exchanger manufacturing method according to the second embodiment of the present invention;
FIG. 10 is a descriptive view illustrating the inside of the vessel for bonding the plates during the diffusion bonding process, in the heat exchanger manufacturing method according to the second embodiment of the present invention;
FIGS. 11(A), 11(B) and 11(C) are descriptive views illustrating the diffusion bonding state of the plates, in the heat exchanger manufacturing method according to the second embodiment of the present invention; and

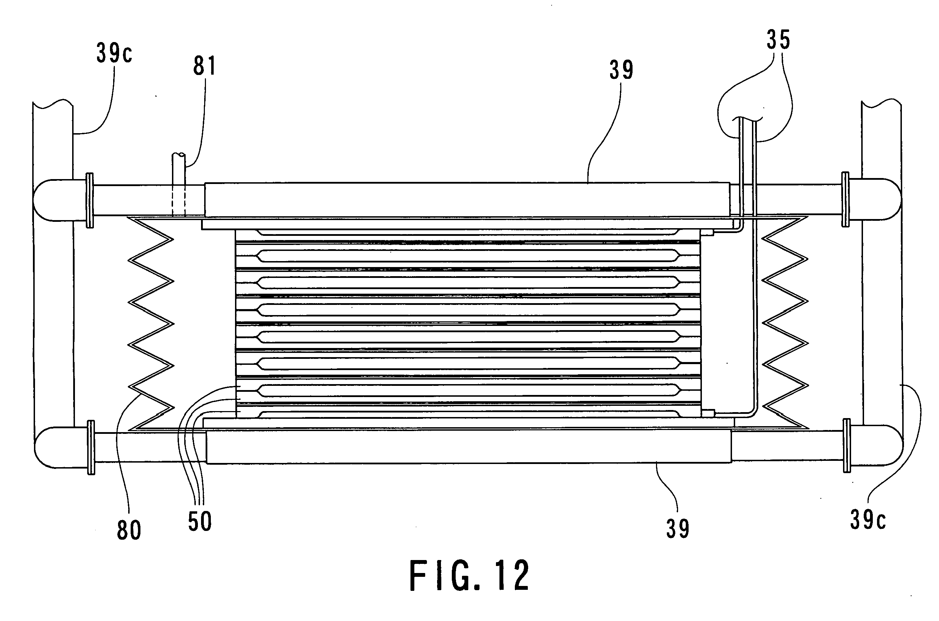

FIG. 12 is a descriptive view illustrating a state in which the heat exchange plates manufactured by the method according to the other embodiment of the present invention are received in a vessel.

### DETAILED DESCRIPTION OF THE PREFERRED EMBODIMENTS

### [First Embodiment of the Present Invention]

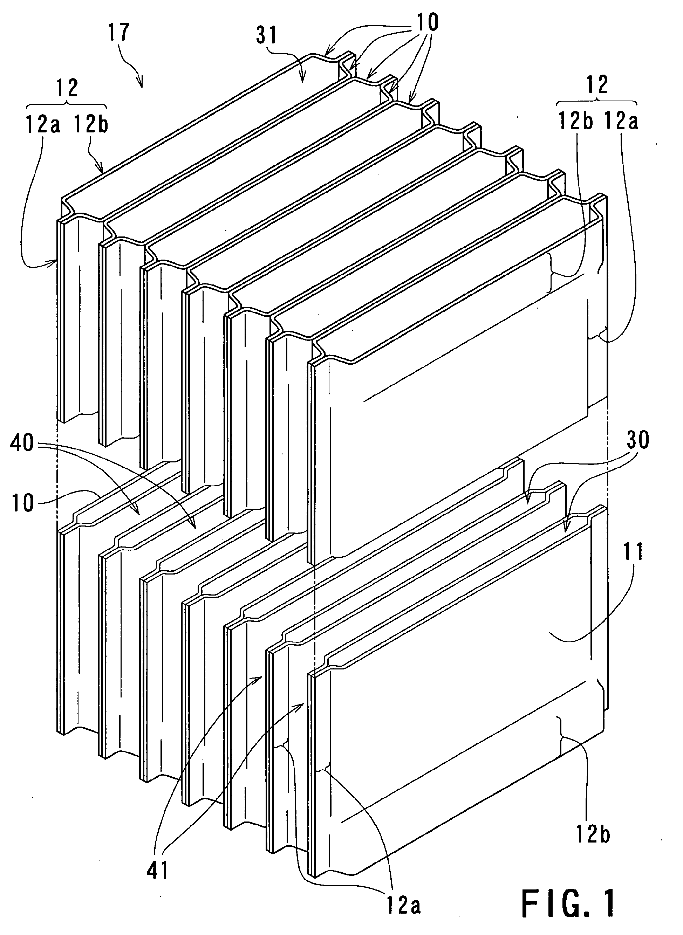

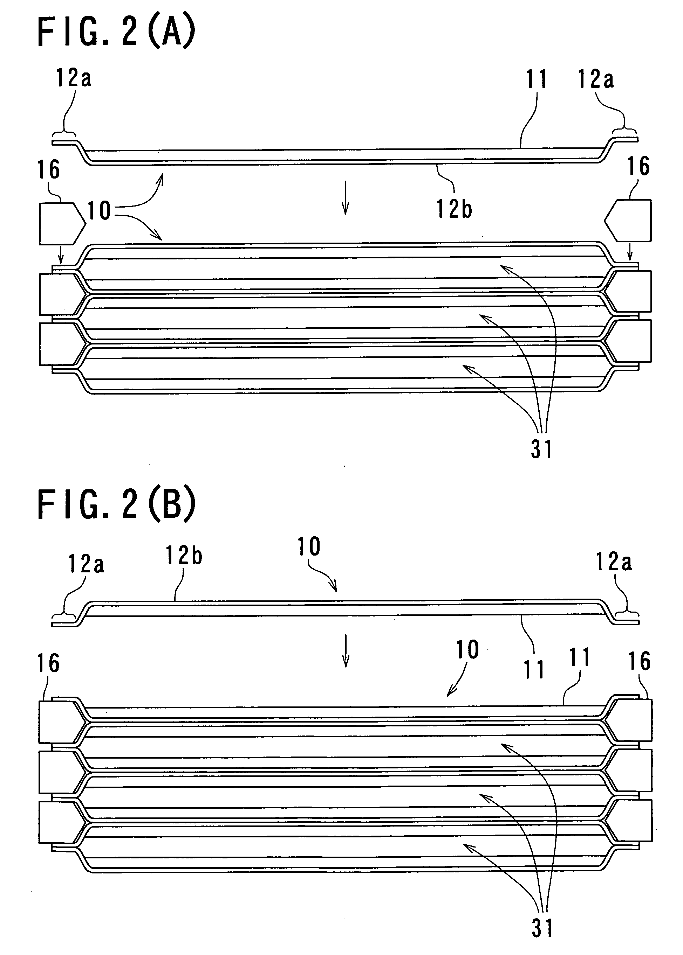

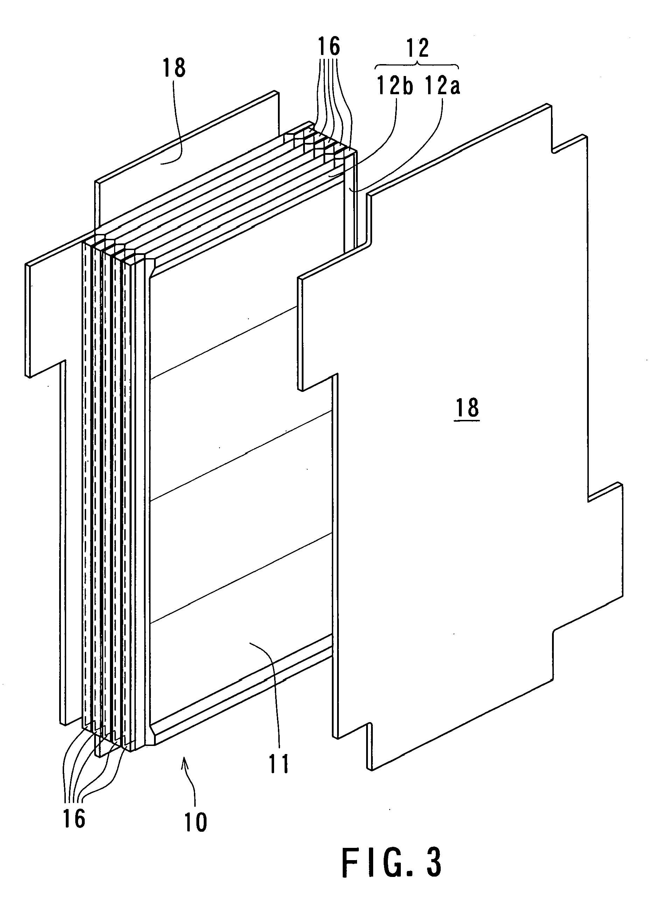

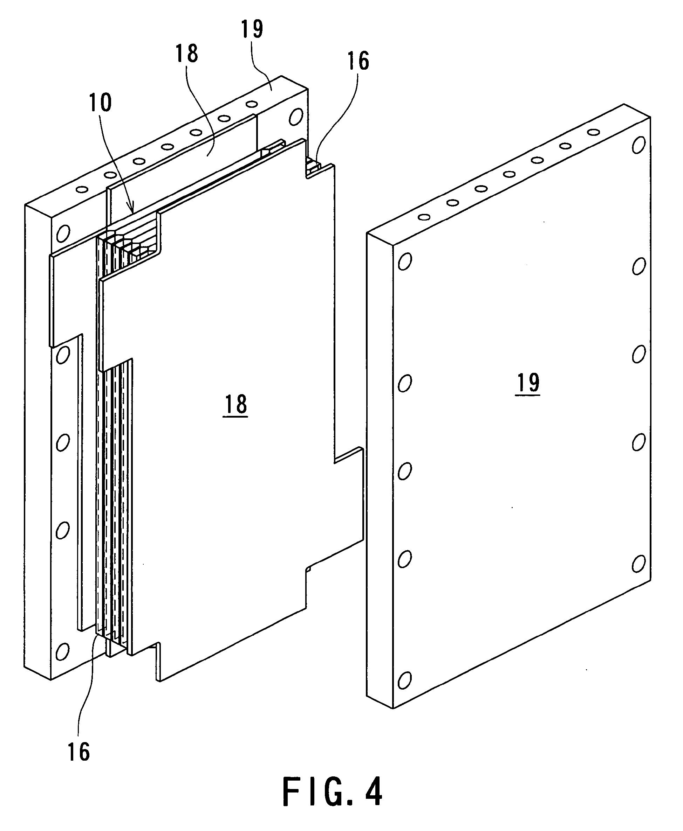

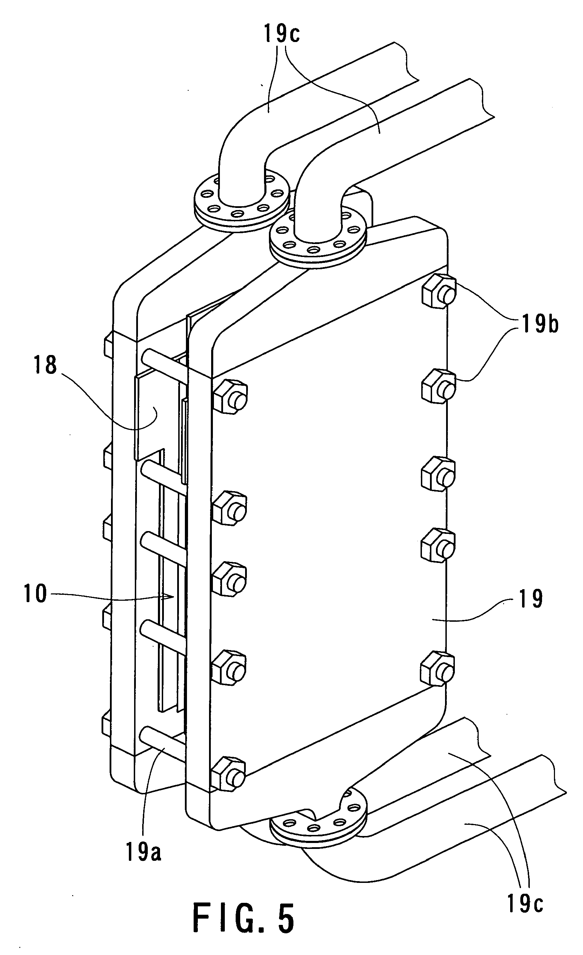

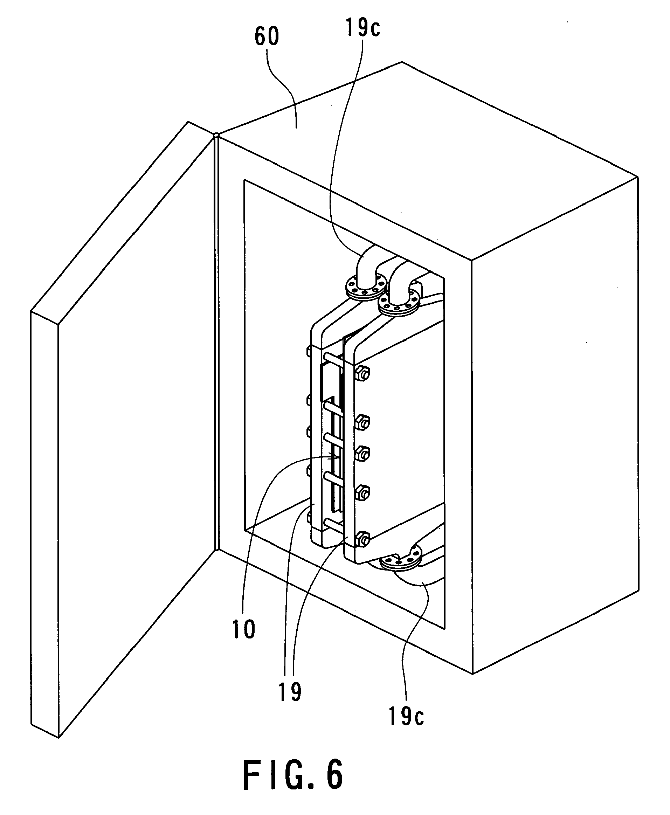

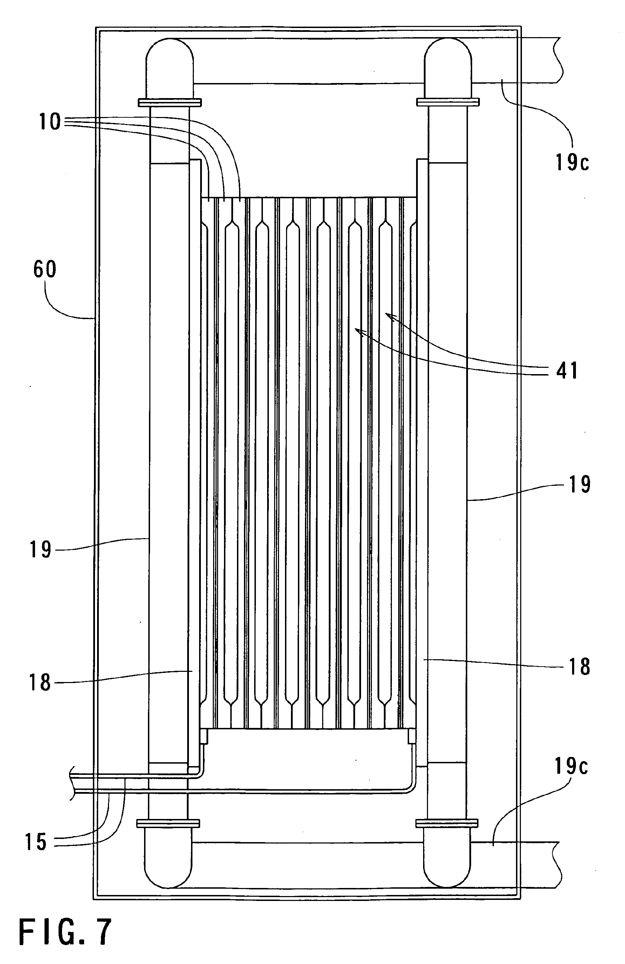

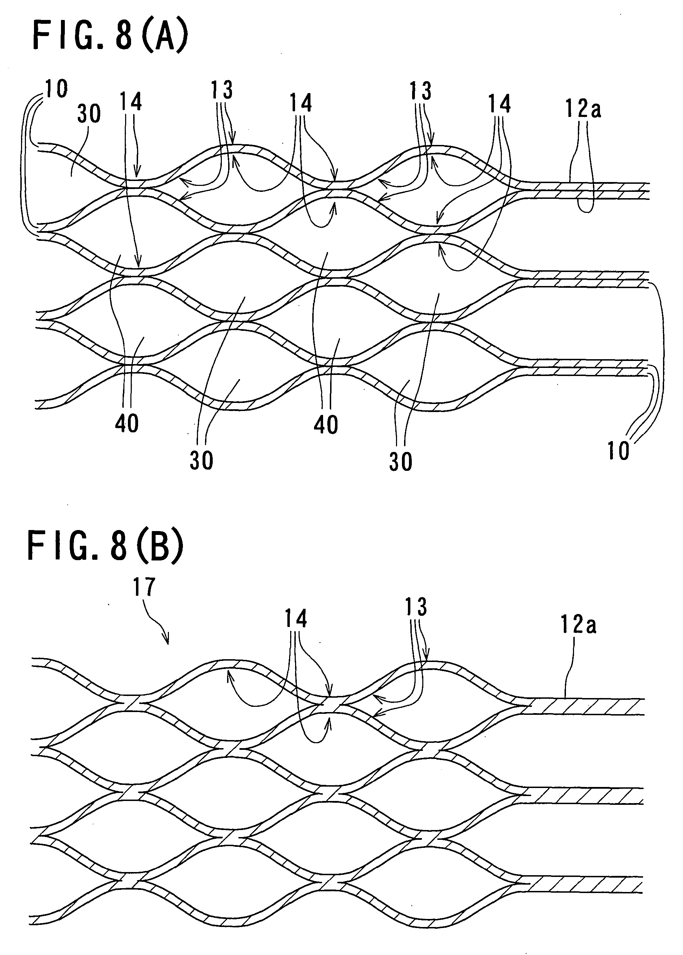

Now, the first embodiment of the present invention will be described in detail below with reference to FIGS. 1 to 8. FIG. 1 is a schematic structural view of a plate assembly manufacture in accordance with a heat exchanger manufacturing method according to the first embodiment of the present invention; FIGS. 2(A) and 2(B) are descriptive views illustrating a stacking state of heat exchange plates in the heat exchanger manufacturing method according to the first embodiment of the present invention; FIG. 3 is a descriptive view illustrating a placing state of cover plates in the heat exchanger manufacturing method according to the first embodiment of the present invention; FIG. 4 is a descriptive view illustrating a placing state of cooling plates in the heat exchanger manufacturing method according to the first embodiment of the present invention; FIG. 5 is a descriptive view illustrating a state in which the cooling plates and the heat exchange plates are combined together, in the heat exchanger manufacturing method according to the first embodiment of the present invention; FIG. 6 is a descriptive view illustrating a state in which the heat exchange plates are received in a vessel for bonding the plates, in the heat exchanger manufacturing method according to the first embodiment of the present invention; FIG. 7 is a descriptive view illustrating an inside of the vessel for bonding the plates during a diffusion bonding process, in the heat exchanger manufacturing method according to the first embodiment of the present invention; and FIGS. 8(A) and 8(B) are descriptive views illustrating a diffusion bonding state of the plates, in the heat exchanger manufacturing method according to the first embodiment of the present invention.

As shown in the above-mentioned figures, the method according to the first embodiment of the present invention for manufacturing a heat exchanger comprises placing a plurality of heat exchange plates 10, which are formed of a metallic plate member having a rectangular shape, one upon another to prepare a set of stacked plates 10, disposing a cover plate 18 and a cooling plate 19 on the opposite outermost plates 10, respectively, putting the stacked plates 10 and the cover plate 18 and the cooling plate 19 in such a stacked state, into a bonding vessel 60 that provides a bonding space, increasing a temperature of each of the plates to a diffusion temperature to diffusion-bond the plates at the entire contacting areas, thus manufacturing a united body 17 in which the plates are firmly bonded together at many contacting areas.

The heat exchange plate 10 has a structure in which a heat transfer section 11 having a pattern of irregularity is formed on the central portion of a rectangular metallic thin sheet and flanges 12 are formed in the periphery of the plate so as to surround the heat transfer section 11, utilizing a prescribed press-forming device (not shown).

The heat transfer section 11 is a region, which has the optimized pattern of irregularities, so that a high temperature heat exchange fluid (i.e., the first heat exchange fluid) is to come into contact with one surface of the heat transfer section 11 and a low temperature heat exchange fluid (i.e., the second heat exchange fluid) is to come into contact with the other surface thereof, in order to make heat exchange, and more specifically has a plurality of projections 13 that are placed in a predetermined arrangement on a surface of the metallic plate and a plurality of recesses 14 each of which is placed between the projections 13 on the surface of the metallic plate so as to dent in an opposite direction to a protruding direction of the projections 13.

The pattern of irregularity of the heat transfer section 11 is symmetric in a positional relationship between the projections and the recesses with respect to the center of the vertical direction (i.e., the longitudinal direction) of the plate. When the heat exchange plate 10 is placed on the other heat exchange plate having the same configuration so that the inner surfaces of them face each other and the latter is positioned upside down, the projections and recesses of the former coincide with those of the latter, respectively, and the projections of the central pattern portion and the projections of the boundary pattern portion of the one heat transfer member come into close contact with those of the other heat transfer member, respectively. The pattern of irregularities has a known wave-shaped cross section, which provides an excellent heat transfer property and groove portions through which condensed water can be discharged rapidly. The above-mentioned wave-shaped cross section and the groove portions are known and description of them will be omitted.

The projections 13 and recesses 14, which formed on the upper surface of the heat transfer section 11, form recess-portions and projection-portions on the lower surface of the heat transfer section 11, respectively. The upper surface configuration of the heat transfer section 11 including the recesses 14 and the lower surface configuration thereof including the recess-portions corresponding to the projections 13 may be symmetric so as to provide the same configuration each other, and the upper surface configuration of the heat transfer section 11 including the projections 13 and the lower surface configuration thereof including the projection-portions corresponding to the recesses 14 may be symmetric so as to provide the same configuration. To the contrary, the upper and lower surface configurations of the heat transfer section 11 may be asymmetric so as to provide the different configurations from each other. Determination of use of which type of the heat transfer section configuration depends upon conditions of heat exchange as actually applied.

The flange 12 is composed of flat portions 12a, which are disposed continuously along two sides of the periphery of a rectangular shape and bulge portions 12b continuously extending from the heat transfer section 11 along the other two sides. When the plates are placed in parallel one upon another, the adjacent two plates come into contact with each other at their flat portions and bulge portions. In such a state, the non-contact portions of these two plates define openings, which communicate with gap portions 30, 40 formed between the plates.

When the heat exchange plates 10 are placed in parallel one upon another, there are provided alternately, between the heat transfer sections 11 thereof, the first gap portions 30 through which the first heat exchange fluid flows and the second gap portions 40 through which the second heat exchange fluid flows. A set of the heat exchange plates 10 thus stacked is provided on the opposite longer sides thereof with the first openings 31 for causing the first heat exchange fluid to flow in and from the first gap portions 30, on the one hand, and on the opposite shorter sides thereof with the second openings 41 for causing the second heat exchange fluid to flow in and from the second gap portions 40, on the other hand. The positions of the first and second openings 31, 41 may be optionally set by changing the positional relationship between the flat portions 12a and the projections 12b of the flange 12. After joining the plates at the flanges 12, the first and second gap portions are completely separated from each other in a water-tight manner except for the first and second openings 31, 41.

The cover plate 18 serves as an outer shell of the heat exchanger and is made of a metallic thick plate having a sufficient strength.

The cooling plate 19 is made of a thick plate so as to provide a hollow portion through which cooling water serving as a cooling medium flows and a sufficient strength preventing deformation thereof. The cooling plate 19 serves as a guide member which is fastened by bolts 19a to prevent deformation and deviation of the heat exchange plates 10.

Now, description will be given below of manufacturing steps of the heat exchanger manufacturing method of the first embodiment of the present invention. On the assumption that the heat exchange plates 10 are made of titanium and in previous steps prior to the manufacturing steps as mentioned above, the titanium thin plates are subjected to a press-forming process utilizing a press forming device, and the heat exchange plates thus press-formed are transferred to stages for the manufacturing steps as mentioned above. The recess portions on the lower surface of the plate, which correspond to the projections 13 on the upper surface thereof, has the same shape as that of the recesses 14 on the upper surface of the plate, and the projections portions on the lower surface of the plate, which correspond to the recesses 14 on the upper surface thereof, has the same shape as that of the projections 13 on the upper surface of the plate.

First, the heat exchange plate 10 is placed on the other heat exchange plate 10 with the upper surfaces thereof brought into contact with each other to prepare a first-stage combination of plates. Then, the other pair of heat exchange plates 10 are placed on the opposite sides of the basic combination of plates with the lower surfaces thereof brought into contact with each other to prepare a second-stage combination of plates. The, further other pair of heat exchange plates 10 are placed on the opposite sides of the second-stage combination of plates with the upper surfaces thereof brought into contact with each other to prepare a third-stage combination of plates. Such a combination step is repeated. In such steps, the heat exchange plate 10 to be stacked for example in the third-stage combination step is placed on the other heat exchange plate 10 as already placed in accordance with the second-stage combination step so that the inner surface of the heat exchange plate 10 in the third-stage combination step face the outer surface of the heat exchange plate 10 in the second-stage combination step and the latter is positioned upside down, but the inner surface of the heat exchange plate 10 in the third-stage combination step face the inner surface of the heat exchange plate 10 in the first-stage combination step and these plates have the same configuration orientation. A predetermined number of plates are stacked while placing the alternate plates upside down and turning them inside out.

During combining the heat exchange plates 10 together, a spacer 16 that is made of material, which does not diffusion-bond to the heat exchange plates under diffusion bonding conditions of the heat exchange plates, is placed in a space between the flat portion 12a of the flange 12 of the heat exchange plate 10 and the flat portion 12a of the flange 12 of the adjacent heat exchange plate 10 to apply a uniform pressure to the opposing surfaces of the flat portions 12a of the heat exchange plates 10, even when increase in a temperature of the plates during the diffusion bonding puts the flat portions 12a of the plates in an annealing condition, thus causing unfavorable deformation of the flat portions 12a of the plates. Therefore, an appropriate contact state of the flat portions 12a of the adjacent plates can be ensured to cause the diffusion bonding to appropriately progress. The spacers may be inserted into the spaces between the flat portions of the heat exchange plates 10, after completion of the combining steps of the plates 10.

In the adjacent heat exchange plates 10 thus stacked, the flanges 12 come into contact with each other at the flat portions 12a or the bulge portions 12b, and the projections 13 on the heat transfer sections 11 of the adjacent heat exchange plates 10 come into contact with each other. Such a contact state of the heat exchange plates 10 causes the heat exchange plates 10 to be placed apart from each other by a predetermined distance, excepting the contact areas.

In the heat exchange plates 10 thus stacked, a gap between the heat transfer sections 11 of the upper surfaces of the adjacent heat exchange plates 10 serves as the first gap portion 30 and a gap between the bulge portions 12b of the flange 12 at the edge of the longitudinal side (i.e., the respective short side) serves as the first opening 31 communicating with the above-mentioned first gap portion 30 (see FIG. 1).

In the heat exchange plates 10 thus stacked, a gap between the heat transfer sections 11 of the lower surfaces of the adjacent heat exchange plates 10 serves as the second gap portion 40 and a gap (in which the spacer 16 is placed) between the flat portions 12a of the flange 12 at the edge of the transverse side (i.e., the respective long side) serves as the second opening 41 communicating with the above-mentioned second gap portion 40 (see FIG. 1).

After a predetermined number of the heat exchange plates 10 is stacked into a plate assembly 17, the cover plate 18 is placed on each end of the plate assembly 17 in the stacking direction, and the cooling plate 19 is placed on the outer surface of the respective cover plate 18. The cooling plates 19 are fastened together with the use of bolts 19a and nuts 19b. A relatively weak pressing force (a maintaining force) is applied to the plates in the direction of the normal to the plates, thus maintaining parallelism thereof. The pressing force is set as a smaller pressure (in case of titanium, about 0.5MPa) to an extent that plastic deformation does not occur even when the temperature of the heat exchange plate 10, which has once been subjected to the press formation process, increases to a predetermined temperature at which diffusion bonding peculiar to the material of the plate occurs (in case of titanium, from about 800°C to about 900°C). Accordingly, the diffusion bonding causes no damage to the press-formed shape of the heat exchange plate 10. The pressure applied to the plate is adjusted by tightening torque of the bolts 19a and the nuts 19b.

In addition, a conduit 19c having a tubular shape is connected to each of the cooling plate 19 so that the cooling water flows therein. The heat exchange plate 10, which is placed on the one end side in the stacking direction of the heat exchange plates, and the cover plate 18, which comes into contact with this heat exchange plate 10 are connected to one of the terminals of an electric power supply (not shown), and the heat exchange plate 10, which is placed on the other end side in the stacking direction of the heat exchange plates, and the cover plate 18, which comes into contact with this heat exchange plate 10 are connected to the other of the terminals of an electric power supply so that electric current can be applied to all the heat exchange plates 10 through their contact areas. The heat exchange plates 10 and the other components attached thereto are received in a diffusion bonding vessel 60, which can provide a vacuum state in which air is removed from an internal space that can be separated from an open air, or a low pressure state in which only an inner gas atmosphere exists. Then, the inner space of the vessel is separated from the open air, and pressure in the vessel is reduced to remove air from the inner space thereof and each gap portions between the plates to provide the vacuum state or an inert gas such as argon gas is supplied into the inner space of the vessel during the pressure reducing operation to substitute the inert gas for the air, while maintaining a communicating condition of the above-mentioned conduit 19c with the open air and a connecting condition of the plates with feeding wires 15 of the electric power source.

When the electric power source is turned on in such a state to apply an electric current through the feeding wires 15 to the stacked plates, Joule heat is generated directly from the plates themselves to provide an electric current application-heating state in which the plates are heated. The temperature of the contact areas including the projections 13, which projects from the plates, is increased to reach the predetermined temperature (in case of titanium, from about 800°C to about 900°C) at which the diffusion bonding occurs. The plates, which come into contact with each other by a predetermined pressure caused by the bolts and nuts, are kept at the above-mentioned temperature for about one hour, to diffusion-bond the contact areas of the plates into a united body. The plates come into contact with each other at the small areas including the projections 13, etc., during the diffusion bonding operation. As a result, contact pressure between the plates is relatively high to provide an appropriate contact state of the plates, thus permitting progress of the diffusion bonding at the contact areas of the plates, without causing any problems.

A force required to plastically deform the plates is gradually decreased, and in other words, the plates becomes apt to be plastically deformable, along with temperature increase of the plates prior to the diffusion bonding. However, the pressure by which the plates as stacked and fastened are pressed each other is set to be small to an extent that the plates are not plastically deformed, even when the plates are placed at the predetermined temperature at which the diffusion bonding occurs. Therefore, there is no variation in shape of the plates and an appropriate contact state in which the adjacent plates come into contact with each other can be maintained.

After completion of the diffusion bonding of the heat exchange plates 10 at the contact areas thereof, the heating step by applying the electric current is stopped, and the cooling water is supplied into the hollow portions of the cooling plates 19 to cool rapidly the heat exchange plates 10 as bonded, from the outside thereof. After the temperature of the plates decreases to a temperature which has no influence on characteristic properties of the plates, even when they come into contact with air, the internal space and the gap portions between the plates are restored from the vacuum state or the low pressure state to the original state prior to the pressure reducing operation. Then, the united plate assembly 17 composed of the heat exchange plates 10 is taken out from the diffusion bonding vessel 60. All the spacers 16 are removed from the spaces between the flat portions 12a of the flange 12 of the plates. The manufacturing steps are completed in this manner.

In the united plate assembly 17 into which the heat exchange plates 10 are combined together by the diffusion bonding process, the plates are integrally connected with each other at the edges of the plates and the contact areas of the projections 13 of the heat transfer section 11, excepting the openings 31, 41, through the diffusion bonding process, thus providing an extremely high bonding strength of the plates 10. It is therefore possible to make heat exchange between the first and second heat exchange fluids without causing deformation of the plates 10, even when the heat exchange fluids having a high pressure are used or there is a large difference in pressure between the first and second heat exchange fluids.

According to the first embodiment of the present invention, the heat exchange plates 10 are placed one upon another and the minimum pressure is applied to the stacked plates 10 only in the stacking direction, to ensure a contact state at positions where the adjacent plates should come into contact with each other, and the stacked plates are put in the temperature condition and the atmospheric condition under which the diffusion bonding of metal of which the plates are made, appropriately progresses, to bond the adjacent plates together at a plurality of contact portions thereof by the diffusion bonding. It is therefore possible to manufacture the heat exchanger in which the stacked plates 10 are combined firmly together not only at the peripheral edges of the plates, but also at a large number of contact portions thereof, by using normal heat exchange plates obtained by a press-forming process, without impairment of the press-formed shapes of the plates. Accordingly, a pressure proof strength for each part of the heat exchanger can be substantially enhanced to permit increase in pressure of the heat exchange fluid as introduced or increase in difference in pressure between the heat exchange fluids, thus making it possible to set appropriate conditions under which an effective heat exchange is made. A high performance heat exchanger can therefore be provided.

In the first embodiment as described above of the present invention, the cooling water is supplied into the cooling plate 19 only when cooling the plates after completion of the diffusion bonding process. However, the present invention is not limited only to such an embodiment. In case where the electric current is applied to the heat exchange plate 10 through the cooling plates 19 and the cover plates 18, and in other words, the electric current is applied also to the cooling plates 19 and the cover plates 18 to generate Joule heat therefrom, the cooling water may be supplied into the cooling plates 19 even during application of the electric current to the heat exchange plates 10. This makes it possible to cool the cooling plates 19, while applying the electric current to the plates during the diffusion bonding, to prevent variation in shape (i.e., a warp) of the cooling plates 19 and the cover plates 18 and to maintain a proper positional relationship among the cooling plates 19, the cover plates 18 and the plates 10 placed between them, thus preventing adverse effects in the bonding of the plates 10. The spacer 16 may have a hollow structure through which a cooling water flows to cool the plates in cooperation with the cooling plates 19.

### [Second Embodiment of the Present Invention]

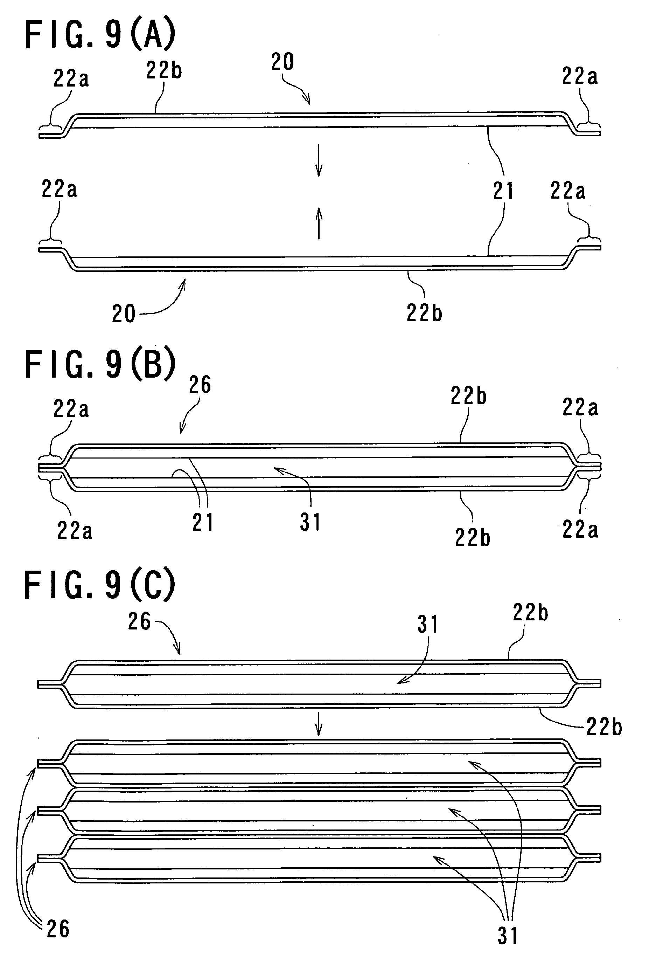

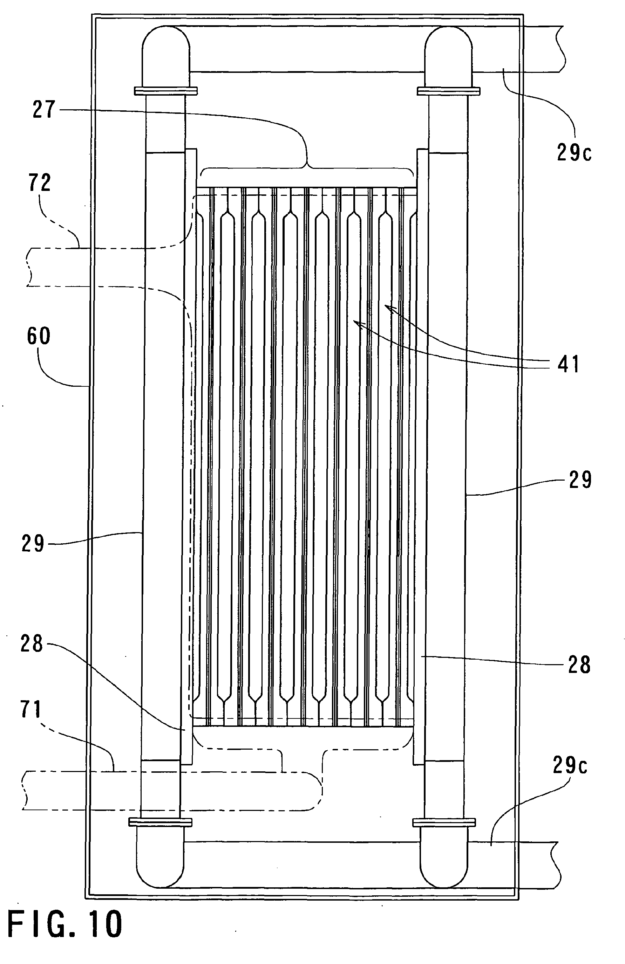

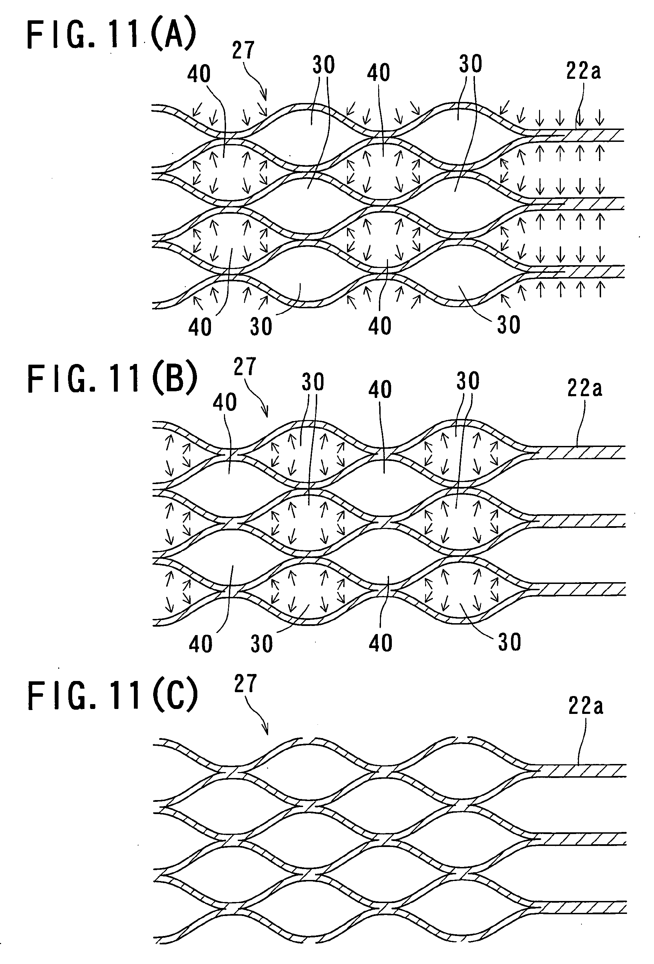

Now, the second embodiment of the present invention will be described in detail below with reference to FIGS. 9(A) to 11(C). FIGS. 9(A), 9(B) and 9(C) are descriptive views illustrating a stacking state of the heat exchange plates in the heat exchanger manufacturing method according to the second embodiment of the present invention, FIG. 10 is a descriptive view illustrating the inside of the vessel for bonding the plates during the diffusion bonding process, in the heat exchanger manufacturing method according to the second embodiment of the present invention, and FIGS. 11(A), 11(B) and 11(C) are descriptive views illustrating the diffusion bonding state of the plates, in the heat exchanger manufacturing method according to the second embodiment of the present invention.

The second embodiment of the present invention is the same as the first embodiment of the present invention in that the stacked heat exchange plates 20, the cover plates 28 and the cooling plates 29 are received in the diffusion bonding vessel 60 and they are bonded together at the contact areas by the diffusion bonding process, but the former is different from the latter in that the united plate assembly 27, which has previously been prepared by welding the heat exchange plates 20 at the edges thereof, is received in the fusion bonding vessel, and a heating step is applied to the plates in a high temperature atmosphere to diffusion bond the plates at the contact areas of the projections of the heat transfer sections 21, which are placed in the center of the respective plate.

The heat exchange plate 20 has a structure in which a heat transfer section 21 having a pattern of irregularity is formed on the central portion of a rectangular metallic thin sheet and flanges 22 are formed in the periphery of the plate so as to surround the heat transfer section 21, utilizing a prescribed press-forming device (not shown), in the same manner as the first embodiment of the present invention. The heat transfer section 21 and the flange 22 are the same in shape and structure as those of the first embodiment of the present invention. Description of them is therefore omitted.

When the heat exchange plates 20 are placed in parallel one upon another, there are provided alternately, between the heat transfer sections 21 thereof, the first gap portions 30 through which the first heat exchange fluid flows and the second gap portions 40 through which the second heat exchange fluid flows. A set of the heat exchange plates 20 thus stacked is provided on the opposite longer sides thereof with the first openings 31 for causing the first heat exchange fluid to flow in and from the first gap portions 30, on the one hand, and on the opposite shorter sides thereof with the second openings 41 for causing the second heat exchange fluid to flow in and from the second gap portions 40, on the other hand.

Now, description will be given below of manufacturing steps of the heat exchanger manufacturing method of the second embodiment of the present invention. On the assumption that in previous steps prior to the manufacturing steps as mentioned above, the thin plates are subjected to a press-forming process utilizing a press forming device, and the heat exchange plates 20 thus press-formed are transferred to stages for the manufacturing steps as mentioned above.

The heat exchange plate 20 is placed on the other heat exchange plate 20, which has been prepared through the same steps for the former plate, with the former plate placed upside down and turned inside out. These plates come into contact with each other not only at the flat portions 22a of the flanges 22 thereof, but also at the projections on their heat transfer sections 21, thus providing a predetermined gap between them, except for these contact areas. These two heat exchange plates 20 thus stacked are welded together at parts of the flat portions 22a of the flanges 22 to prepare a pair of welded plates 26. A gap between these two heat exchange plates 20 of which the pair of welded plates 26 is composed serves as the first gap portion 30, and another gap between the bulge portions 22b of the flanges 22 of the plate on the shorter sides thereof serves as the first opening 31, which communicates with the above-mentioned first gap portion 30.

The pair of welded plates 26 is placed on the other pair of welded plates 26, which has been prepared through the same steps for the former, so that these pairs of welded plates 26 come into contact with each other not only at the bulge portions 22b of the flanges 22 of the heat exchange plates 20, but also at the projections of the heat transfer sections21, and these pairs of welded plates 26 are apart from each other by a predetermined distance at the other areas than the contact areas.

These stacked pairs of welded plates 26 are welded together at the edges of the bulge portions 22b of the adjacent heat exchange plates 20 into a united body. In such a united body of the welded plates 26, a gap between the pair of welded plates 26 and the other pair of welded plates 26 serves as the second gap portion 40, and a gap between the flat portions 22a of the flanges 22, which are not brought into contact with each other, serves as the second opening 41, which communicates with the above-mentioned second gap portion 40. The same step of welding the two pairs of the welded plates 26 is repeated for a required pairs of the welded plates 26 to prepare a united plate assembly 27.

After completion of preparing the united plate assembly 27, the cover plate 28 is placed on each end of the plate assembly 27 in the stacking direction, and the cooling plate 29 is placed on the outer surface of the respective cover plate 28. The cooling plates 29 are fastened together with the use of bolts and nuts. A relatively weak pressing force (a maintaining force) is applied to the plates in the direction of the normal to the plates, thus maintaining parallelism thereof.

In addition, a conduit 29c having a tubular shape is connected to each of the cooling plate 29 so that the cooling water flows therein. Conduits 71, 72 for pressure reduction/increase and gas supply/discharge for the first gap portions 30 and the second gap portions 40 are connected to the first opening 31 and the second opening 41. The united plate assembly 27 and the other components attached thereto are received in a diffusion bonding vessel 60, which can provide a vacuum state or a low pressure state in the same manner as the first embodiment of the present invention. Then, the inner space of the vessel is separated from the open air, and pressure in the vessel is reduced to remove air from the inner space thereof to provide the vacuum state or an inert gas such as argon gas is supplied into the inner space of the vessel during the pressure reducing operation to substitute the inert gas for the air, while maintaining a communicating condition of the above-mentioned conduit with the open air. At the same time, air is removed from each gap portions between the plates to provide the vacuum state or an inert gas such as argon gas is supplied into the gap portions between the plates to substitute the inert gas for the air through the above-mentioned conduits.

Then, the inert gas having a high temperature and a predetermined pressure is supplied into the second gap portions 40 through the second openings 41 and the conduit 72, while maintaining the vacuum state or the low pressure state in the first gap portions 30, so that the pressure in the second gap portion 40 is higher than the first gap portion 30 by about 20-100kPa. In such a state, the temperature of the plates defining the first gap portion 30 is increased and pressure is applied to these plates to generate a force, which causes these plates to come close to each other (see FIG. 11(A)). The plates are firmly held so that the contact areas of the projections of the heat transfer sections 21 of the plates, which areas are located in the first gap portion 30, is kept at the pressure of 2 to 5MPa in this manner and the temperature thereof is increased to the predetermined temperature (in case of titanium, from about 800°C to about 900°C) at which the diffusion bonding occurs. Such a temperature is kept for a predetermined period of time to diffusion-bond the contact areas of the plates.

After completion of the diffusion bonding of the contact areas of the projections, which are placed in the first gap portion 30, the gas in the second gap portion 40 is removed through the second opening 41 and the conduit 72 to put the second gap portion 40 in a vacuum state or a low pressure state. Then, the inert gas having a high temperature and a predetermined pressure is supplied into the first gap portions 30 through the first openings 31 and the conduit 71 so that the pressure in the first gap portion 30 is higher than the second gap portion 40. In such a state, the temperature of the plates defining the second gap portion 40 is increased and pressure is applied to these plates to generate a force, which causes these plates to come close to each other (see FIG. 11(B)). The plates are firmly held so that the contact areas of the projections of the heat transfer sections 21 of the plates, which areas are located in the second gap portion 40, is kept at the pressure in the same manner as the case of bonding of the contact areas of the projections in the second gap portion 40 and the temperature thereof is increased to the predetermined temperature. Such a temperature is kept for a predetermined period of time to diffusion-bond the contact areas of the plates.

After completion of the diffusion bonding of the heat exchange plates 20, the high temperature gas is removed and the inner space of the vessel and the gap portions are put in the vacuum or low pressure state and a non-heating state, and the cooling water is supplied into the hollow portions of the cooling plates 29 to cool rapidly the united plate assembly 27 from the outside thereof. After the temperature of the plates decreases to a temperature which has no influence on characteristic properties of the plates, even when they come into contact with air, the internal space and the gap portions between the plates are restored from the vacuum state or the low pressure state to the original state prior to the pressure reducing operation. Then, the united plate assembly 27 is taken out from the diffusion bonding vessel 60. The manufacturing steps are completed in this manner.

In the united plate assembly 27 into which the heat exchange plates 20 are combined together by the diffusion bonding process, the plates are integrally connected with each other, not only at the edges as welded of the plates, but also at the contact areas of the projections 13 of the heat transfer section 11, excepting the openings 31, 41, through the diffusion bonding process, thus providing an extremely high bonding strength of the plates 20 in the same manner as the first embodiment of the present invention. It is therefore possible to make heat exchange between the first and second heat exchange fluids without causing deformation of the plates 20, even when the heat exchange fluids having a high pressure are used or there is a large difference in pressure between the first and second heat exchange fluids.

According to the second embodiment of the present invention, the stacked heat exchange plates 20 are previously welded at the peripheral edges of the plates to prepare a welded assembly and then the welded assembly are bonded together by diffusion bonding at portions thereof, which are brought into contact with each other and have not been bonded together. The plates can therefore be previously combined into the welded assembly, prior to the diffusion bonding, to ensure an appropriate stacking state of the plates so that the welded assembly can be easily handled. This step may be applied as a subsequent step in the conventional method of manufacturing a heat exchanger in which only peripheral edges of plates are welded together, thus enabling the plates as combined in accordance with the conventional method of a heat exchanger to be more firmly combined together. Therefore, a pressure proof strength can be substantially enhanced to permit to introduce a high pressure heat exchange fluid into a gap between the adjacent plates. As a result, a heat exchange efficiency can be improved in accordance with various types of heat exchange conditions.

In the second embodiment as described above of the present invention, the heat exchange plates 20 are welded together at the edges thereof, prior to the diffusion bonding process. However, the present invention is not limited only to such an embodiment. The heat exchange plates may be bonded by a brazing process utilizing a brazing metal having a melting point, which is higher than the maximum temperature to which the plates reach in the fusion bonding vessel 60 during the fusion bonding process, in place of the above-mentioned welding process.

In the above-described first and second embodiments of the present invention for manufacturing the heat exchanger, the heat exchange plates 10, 20 having no holes are used as the plate to be stacked into the united plate assembly, so as to be adapted to the heat exchanger structure in which the openings 31, 41 for supply and discharge for the heat exchange fluids are placed at the peripheral portions of the plates. However, the present invention is not limited only to such an embodiment. Plates each of which has holes through which the heat exchange fluids flow in the same manner as the conventional plates for a usual plate-type heat exchanger that are placed one upon another through gasket members may be used as the heat exchange plates to be stacked. In this case, when the projections, which serve as the contact areas of the adjacent plates, are provided in a place continuously surrounding the hole in which there is a difficulty in welding the plate through the conventional welding process, the plates are fusion-bonded appropriately at the above-mentioned place in a water-tight manner. The fusion-bonded areas provide such a water-tight property to permit formation of a part of the fluid passage. Therefore, the heat exchanger can be manufactured without causing any problems.

In the above-described first embodiment of the present invention for manufacturing the heat exchanger, the plates are heated by applying the electric current thereto to diffusion-bond all the contact areas of the plates, and in the above-described second embodiment of the present invention for manufacturing the heat exchanger, a high temperature gas is used to heat the plates, in order to diffusion-bond the plates, which have been temporarily welded at the peripheral edges thereof. However, the present invention is not limited only to such embodiments. The other heating process such as a high temperature gas heating, than the electric current application-heating may be applied in order to diffusion-bond all the contact areas of the plates, or the other heating process such as an electric current application-heating, than the high temperature gas heating may be applied in order to diffusion-bond the plates, which have been temporarily welded at the peripheral edges thereof.

In the above-described first and second embodiments of the present invention for manufacturing the heat exchanger, the stacked heat exchange plates 10, 20 are received in the diffusion bonding vessel 60 having the internal space, which can be separated from an open air, the internal space of the diffusion bonding vessel 60 is kept in the vacuum state in which air is removed from the internal space or the low pressure state in which only an inner gas atmosphere exists, and then the diffusion bonding process is carried out. However, the present invention is not limited only to such embodiments. The method of the present invention may comprise the steps of placing the heat exchange plates 50 as combined, in a vessel 80 having a thin metallic bellows, which is flexibly deformable in the stacking direction of the plates, applying the pressing force to the plates in the stacking direction thereof, discharging a gas in the vessel through air inlet and outlet portions 81; closing the air inlet and outlet portions 81 to keep an inside of the vessel 80 in the vacuum state or the low pressure state, and then carrying out the diffusion bonding process. In this case, it is possible to put, along with the deformation of the vessel 80, the space surrounding the contact portions of the plates in the vacuum or low pressure state, thus enhancing reliability of the diffusion bonding and providing an improved contact of the plates. In addition, it is possible to reduce load of a pump for discharging the gas in the vessel 80 to provide the vacuum state or the low pressure state, thus permitting the use of a pump having a low output and a low cost and reducing the manufacturing costs required for the diffusion bonding process. The method of the present invention may comprise the steps of disposing cooling plates 39, to which the tubular conduits 39c are connected to flow the cooling water therein, on the outside of the vessel 80 in the same manner as the first embodiment of the present invention, providing feeding wires 35, in a water-tight manner, which are connected to the plates placed on the opposite ends sides of the stacked plates 50 in the stacking direction thereof to apply an electric current to the plates 50, putting the inside of the vessel 80 in the vacuum or low pressure state, applying the electric current to the plates through the feeding wires 35 to heat them, thus causing the diffusion bonding. After completion of the diffusion bonding, the heating step by applying the electric current is stopped, and the cooling water is supplied into the hollow portions of the cooling plates 39 to cool rapidly the heat exchange plates 50 as bonded, from the outside thereof through the vessel 80.

In case where the cooling plates 39 are disposed on the upper and lower sides of the heat exchange plates 50 in the vertically stacking direction, the upper cooling plate 39 may be used as a pressing member for applying a pressing force to the stacked heat exchange plates 50 in the vessel 80. The stacking direction of the plates when carrying out the diffusion bonding is not limited only to such a vertical direction. The diffusion bonding may be carried out in a state the heat exchange plates 50 are stacked in the horizontal direction.

## Claims

1. A method for manufacturing a heat exchanger comprising the steps of: placing a plurality of heat exchange plates (10) one upon another, each of which is formed of a metallic plate member having a predetermined pattern of irregularity and combining the plates into a heat exchanger, in which each of the heat exchange plates (10) is formed into a predetermined shape by a press-forming process so that each of the heat exchange plates (10) includes on at least part thereof a heat transfer section (11) having the pattern of irregularity and first and second opposite surfaces with which first and second heat exchange fluids come into contact, respectively, the heat exchange plates (10) as combined come into contact with each other on at least one part of peripheries thereof, and first gap portions (30) through which the first heat exchange fluid is to pass and second gap portions (40) through which the second heat exchange fluid is to pass are provided alternately between the heat exchange plates (10), wherein, the method further comprising the steps of
placing a predetermined number of the heat exchange plates (10) one upon another to apply a pressing force to the heat exchange plates (10) in a stacking direction thereof to an extent that at least parallelism of the heat exchange plates (10) as placed is maintained and the heat exchange plates (10) are not plastically deformed even when a temperature thereof increases to a predetermined temperature at which a diffusion bonding associated with material of the heat exchange plates (10) occurs, maintaining such a stacking condition and bringing adjacent plates at projections (13) and peripheral edges that protrude from the heat exchange plates (10) into contact with each other; and
putting space surrounding at least contact portions of the plates in a vacuum state or a low pressure state in which only an inner gas atmosphere exists, keeping the plates at a predetermined temperature at which the diffusion bonding occurs by a predetermined period of time and diffusion-bonding portions of the plates, which are only brought into contact with each other and have not been bonded together.

2. The method as claimed in Claim 1, further comprising the steps of:
welding, at a stage of the step of placing the heat exchange plates (10) one upon another, the adjacent plates at the peripheral edges thereof to form a welded assembly in which no variation in a positional relationship between the plates occurs; and
placing the welded assembly in a vacuum state or a low pressure state in which only an inner gas atmosphere exists, keeping the plates at a predetermined temperature at which the diffusion bonding occurs by a predetermined period of time and diffusion bonding portions of the plates, which are only brought into contact with each other and have not been bonded together.

3. The method as claimed in Claim 2, wherein:
the step of welding the heat exchange plates (20) is carried out to combine the plates into the welded assembly so that each of the first and second gap portions (30,40) is isolated from outside, excluding first fluid inlet and outlet portions communicating with the first gap portion (30) and second fluid inlet and outlet portions communicating with the second gap portion (40), and
the method further comprising the steps of:
connecting first supply/discharge conduits (71), which permit supply of a fluid into the first gap portion (30) and/or discharge of the fluid therefrom, to the first inlet and outlet portions, and connecting second supply/discharge conduits (72), which permit supply of a fluid into the second gap portion (40) and/or discharge of the fluid therefrom;
removing a gas from the first gap portion (30) through the first supply/discharge conduits (71) to provide the vacuum state therein or supplying an inert gas into the first gap portion (30) while removing a gas therein, through the first supply/discharge conduits (71), to provide the low pressure state, and supplying an inert gas having a predetermined high temperature and a predetermined pressure into the second gap portion (40) while removing a gas therein, through the second supply/discharge conduits (72), to provide a higher pressure state than the first gap portion (30), and then keeping the contact portions of the projections, which are placed in the heat transfer section (21) of each of the plates and exist in the first gap portion (30), at the predetermined temperature at which the diffusion bonding occurs by the predetermined period of time and diffusion-bonding the contact portions of the plates; and then,
removing a gas from the second gap portion (40) through the second supply/discharge conduits (72) to provide the vacuum state therein or supplying an inert gas into the second gap portion (40) while removing a gas therein, through the second supply/discharge conduits (72), to provide the low pressure state, and supplying an inert gas having a predetermined high temperature and a predetermined pressure into the first gap portion (30) while removing a gas therein, through the first supply/discharge conduits (71), to provide a higher pressure state than the second gap portion (40), and then keeping the contact portions of the projections, which are placed in the heat transfer section (21) of each of the plates and exist in the second gap portion (40), at the predetermined temperature at which the diffusion bonding occurs by the predetermined period of time and diffusion-bonding the contact portions of the plates.

4. The method as claimed in Claim 1 or 2, further comprising the steps of:
placing the heat exchange plates (50) as combined, in a vessel (80) that is flexibly deformable at least in the stacking direction of the plates and has air inlet and outlet portions (81), the vessel providing an air-tight property, excluding the air inlet and outlet portions (81);
applying the pressing force to the plates in the stacking direction thereof and discharging a gas in the vessel (80) through the air inlet and outlet portions (81); and then
closing the air inlet and outlet portions (81) to keep an inside of the vessel (80), which includes the space surrounding the contact portions of the plates, in the vacuum state or the low pressure state.

5. The method as claimed in any one of Claims 1, 2 and 4, comprising the steps of:
causing the heat exchange plate (10) placed on one end side in the stacking direction of the heat exchange plates as combined to be electrically connectable to one electrode of an electric power supply for heating through current application, and causing the heat exchange plate (10) placed on another end side in the stacking direction thereof to be electrically connectable to another electrode of the electric power supply; and
applying electric current to the plates placed on the opposite end sides in the stacking direction of the plates to pass a current through all the heat exchange plates, while keeping the space surrounding at least the contact portions of the plates in the vacuum state or the low pressure state, keeping the plates at a predetermined temperature at which the diffusion bonding occurs through heating through current application by a predetermined period of time and diffusion-bonding the portions of the plates, which are only brought into contact with each other and have not been bonded together.

6. The method as claimed in any one of Claims 1 to 5, further comprising the steps of:
holding the heat exchange plates (10) as stacked, between cooling plates (19) in the stacking direction of the heat exchange plates, each of the cooling plates (19) being made of material, which does not diffusion-bond to the heat exchange plates (10) under diffusion bonding conditions of the heat exchange plates (10), and having a hollow structure, ensuring a state in which heat transfer occurs between the cooling plates (19) and the heat exchange plates (10), and connecting cooling conduits (19c) to the cooling plates (19) so as to enable cooling fluid to be supplied into the cooling plates (19) and discharged therefrom; and
supplying, after completion of diffusion bonding between the heat exchange plates (10), the cooling fluid into the cooling plates (19) to decrease temperature of the heat exchange plates (10), while keeping the vacuum state or the low pressure state in which only the inner gas atmosphere exists.

7. The method as claimed in any one of Claims 1 to 6, further comprising the steps of :
placing, during combining the heat exchange plates (10) together or in a combined state thereof, a spacer (16) between a pair of contact edges of the heat exchange plates (10) and another adjacent pair of contact edges thereof on opposite sides of the combined heat exchange plates (10), to apply a uniform pressure to the pairs of contact edges of the heat exchange plates (10), said spacer (16) being made of material, which does not diffusion-bond to the heat exchange plates (10) under diffusion bonding conditions of the heat exchange plates (10).
